# EUROPEAN PATENT SPECIFICATION

(11) **EP 2 444 701 B1**
(45) Date of publication and mention of the grant of the patent: **01.07.2020**
(21) Application number: 10789181.4
(22) Date of filing: 08.06.2010
(51) Int. Cl.: F16J 15/447, F01D 11/00, F01D 11/02, F01D 25/00, F02C 7/28, F16J 15/22, F16J 15/453, F16J 15/3292, F16J 15/44

(54) **SHAFT SEAL DEVICE**
WELLENDICHTUNGSVORRICHTUNG
DISPOSITIF DE JOINT D'ARBRE

(30) Priority: 16.06.2009 JP 2009143124
(43) Date of publication of application: 25.04.2012
(73) Proprietor: Mitsubishi Hitachi Power Systems, Ltd., Yokohama 220-8401 (JP)
(72) Inventor: UEHARA, Hidekazu, Tokyo 108-8215 (JP); SHINOHARA, Tanehiro, Tokyo 108-8215 (JP); NAKANO, Takashi, Tokyo 108-8215 (JP); NISHIMOTO, Shin, Tokyo 108-8215 (JP); HIRAKAWA, Yuichi, Tokyo 108-8215 (JP)
(74) Representative: Cabinet Beau de Loménie
(86) International application number: PCT/JP2010/003809
(87) International publication number: WO 2010/146797

(56) References cited:
- EP-A1- 2 199 648
- JP-A- 2002 228 013
- JP-A- 2002 228 013
- JP-A- 2005 002 995
- JP-A- 2005 002 995
- JP-T- 2007 521 442
- US-A1- 2008 169 616

## Description

### [TECHNICAL FIELD]

The present invention relates to a shaft seal device that seals the rotating shaft of a rotary machine such as gas turbine, a steam turbine, a compressor, a water wheel, a refrigerator, a pump, and the like.

Priority is claimed on Japanese Patent Application No. 2009-143124, filed June 16, 2009.

### [BACKGROUND ART]

Generally, in a rotary machine such as a gas turbine or a steam turbine, an annular gap is formed between a stationary member such as a stator blade and a member that rotates such as a rotating shaft. A working fluid passing through this annular gap ends up leaking from the high-pressure side to the low-pressure side. In order to prevent this, a shaft seal device is used. As one such shaft seal device, a conventional non-contact type labyrinth seal has been widely used. However, with this type of shaft seal mechanism, it is necessary to ensure that the fin distal end does not make contact with the surrounding members due to a shaft oscillation in a rotation transitional period or a thermal deformation due to a thermal transitional thermal deformation. For that reason, it is necessary to enlarge to some extent the space at the fin distal end, that is, the seal clearance, and thereby the leakage amount of the working fluid is increased.

As a shaft seal device that compensates for this drawback of a labyrinth seal, there is known an abradable seal (for example, refer to Patent Document 1).

In an abradable seal, a plurality of rows of protruding seal fins are arranged at either one of the rotating shaft and the stationary member, and a member with a low sliding heating value and excellent cuttability (hereinbelow called a free-cutting material) is interposed on the other. With this abradable seal, even if the seal fin and the free-cutting material is easily cut by the seal fin. For that reason, the occurrence of sliding heat generation and bending deformation of the rotating shaft due to the heat generation are suppressed, and it is possible to prevent the occurrence of problems such as vibration due to this deformation.

As technology that reduces the amount of leakage of the working fluid in the aforementioned labyrinth seal, in addition to the aforementioned abradable seal, there is known a thin-plate seal that consists of a structure in which a planar thin sheet is arranged in multiple layers in the circumferential direction of the rotating shaft (for example, refer to Patent Document 2).

In this thin-plate seal, when the rotating shaft is stopped the inner-periphery side distal end of the thin plates comes into contact with the rotating shaft with a predetermined pre-load, and when the rotating shaft is rotating, the distal end of the thin plates floats up due to the hydrodynamic effect that occurs by rotation of the rotating shaft. Thereby, the thin plate and the rotating shaft enter a contactless state during rotation of the rotating shaft, and so prevention of wear between each thin plate and the rotating shaft is achieved.

In addition to the above, by constituting one shaft seal device by combining a brush seal and a honeycomb seal, Patent Document 3 discloses for example a hybrid-type brush-honeycomb seal that achieves an improvement in working fluid leakage prevention performance.

Patent document 4 discloses an active retractable seal for turbo machinery and related method.

### [CITATION LIST]

### [PATENT DOCUMENTS]

[Patent Document 1] Japanese Unexamined Patent Application No. 2002-228013
[Patent Document 2] Japanese Patent No. 3917993
[Patent Document 3] Japanese Unexamined Patent Application No. 2004-150430
[Patent Document 4] United States Patent Application Publication No. US 2008/169616 A1

### [SUMMARY OF THE INVENTION]

### [PROBLEM THAT THE INVENTION IS TO SOLVE]

In the aforementioned abradable seal, since contact between the seal fin and the free-cutting material is allowed, it is possible to achieve a reduction in the seal clearance. However, after sliding contact, the seal clearance is increased. Accordingly, there is the disadvantage that, since the flow rate of the working fluid increases at the sliding locations, it is not possible to achieve leakage prevention in a stable manner over a long period.

In the aforementioned thin-plate seal, when the pressure difference between the high-pressure-side region and the low-pressure-side region is a predetermined value or greater, the seal clearance becomes too large, leading to an increase in the flow rate, and so it is necessary to set the pressure difference between the high-pressure-side region and the low-pressure-side region to below the predetermined value. Also, although it is usable even when the pressure difference is great provided a plurality of the thin-plate seals are consecutively installed, doing so leads to a cost increase.

The aforementioned hybrid-type brush-honeycomb seal is of a constitution that separates the high-pressure side and the low-pressure side by the brush seal and the honeycomb seal that are used both making sliding contact between the rotation side and fixed side. For that reason, there is the disadvantage that, by using both seals, they gradually wear. Accordingly, the durability is inferior, and it is not possible to stably achieve leakage prevention over a long period.

The present invention was achieved in view of the above circumstances, and has as its object to provide a shaft seal device that, even in the case of the pressure difference between the high-pressure side region and the low-pressure side region being large, can stably achieve leakage prevention of a working fluid between these regions.

### [MEANS FOR SOLVING THE PROBLEM]

In order to solve the aforementioned issues, the present invention provides the following means.

The shaft seal device according to the present invention is a shaft seal device that seals between the outer peripheral surface of a rotating shaft and a stationary member that is provided on the outer peripheral side of the rotating shaft, provided with a thin-plate seal that has a plurality of thin plates that are arranged in the circumferential direction of the rotating shaft and an abradable seal that is arranged at a position differing with the thin-plate seal in the axial direction, and having a free-cutting material that is disposed at either one of the rotating shaft and the stationary member, and a seal fin that projects toward the rotating shaft or stationary member from the other of the rotating shaft and the stationary member.

According to the shaft seal device with such characteristics, even in the case of wear of the free-cutting material progressing in the abradable seal and the seal clearance increasing as a result, sharing of the differential pressure by the thin-plate seal and the abradable seal is performed. Thereby, since the differential pressure that occurs solely in the abradable seal decreases, it is possible to inhibit changes in the flow rate from the high-pressure side region to the low-pressure side region in the abradable seal. In particular, in the case of the seal clearance of the abradable seal having increased, the ratio of sharing the differential pressure by the thin-plate seal becomes greater than the sharing ratio of the abradable seal. For that reason, it is possible to effectively suppress changes in the flow rate in the abradable seal.

It is possible to reduce the differential pressure that occurs in the thin-plate seal by sharing of the differential pressure. Even in the case of the differential pressure between the high-pressure side region and the low-pressure side region being so large that sealing cannot be performed solely with the thin-plate seal, by applying the thin-plate seal it is possible to carry out stable sealing. Moreover, since the abrasion resistance of this thin-plate seal is high, it is possible to achieve leakage prevention in a stable manner over a long period.

Note that a free-cutting material includes any member with excellent cutting ability with respect to the seal fin, and includes a honeycomb structure that consists of metal or ceramic and the like besides a well-known abradable coating or abradable layer.

The thin-plate seal is arranged more to the high-pressure side than the abradable seal.

Here, in the case of assuming the abradable seal to be arranged more to the high-pressure side than the thin-plate seal, due to wear of the free-cutting material caused by contact with the seal fin, powder is produced by the cutting of the free-cutting material, and this cutting powder flows into the thin-plate seal. When this cutting powder interposes between the thin plates of the thin-plate seal, it is no longer possible to maintain the appropriate gap between the thin plates, and the rigidity is increased. For that reason, the pressing force of the thin plates increases, triggering wear, and changes in the flow rate occur in the thin-plate seal.

With regard to this point, since the thin-plate seal is arranged more to the high-pressure side than the abradable seal in the present invention, the thin-plate seal is not influenced by the cutting powder, and there is no increase in the rigidity of the thin plates. Accordingly, it is possible to achieve prevention in a stable manner of leaks of the working fluid in the thin-plate seal.

A housing is provided between the outer peripheral surface of the rotating shaft and the stationary member, and the thin-plate seal and one of the seal fin and the free-cutting material of the abradable seal are adjacently arranged on the inner periphery of the housing.

According to the shaft seal device with such characteristics, since the thin-plate seal and the abradable seal are arranged in the housing so as to be mutually adjacent, it is possible to achieve suitable sharing of the differential pressure as described above.

### [ADVANTEGE OF THE INVENTION]

Since the shaft seal device of the present invention is provided with a thin-plate seal having excellent wear resistance and high durability and an abradable seal having high differential pressure resistance, even in the case of the differential pressure between the high-pressure side region and the low-pressure side region being large, it is possible to achieve prevention of working fluid leakage in a stable manner over a long period.

### [BRIEF DESCRIPTION OF THE DRAWINGS]

FIG. 1 is an outline configuration drawing of the shaft seal device according to the embodiment in a cross section that includes the axial line.
FIG. 2 is an enlargement of the thin-plate seal shown in FIG. 1.
FIG. 3 is an enlargement of the abradable seal in FIG. 1.
FIG. 4 is an outline configuration drawing of the shaft seal device according to a comparative example in a cross section that includes the axial line.
FIG. 5A is a graph that shows the differential pressure curve from the high-pressure side to the low-pressure side at the initial stage of rotation in the shaft seal device of the comparative example.
FIG. 5B is a graph that shows the differential pressure curve from the high-pressure side to the low-pressure side after sliding in the shaft seal device of the comparative example.
FIG. 6A is a graph that shows the differential pressure curve from the high-pressure side to the low-pressure side at the initial stage of rotation in the shaft seal device of the embodiment.
FIG. 6B is a graph that shows the differential pressure curve from the high-pressure side to the low-pressure side after sliding in the shaft seal device of the embodiment.

### [DESCRIPTION OF EMBODIMENTS]

Hereinbelow, an embodiment of the present invention shall be described with reference to the drawings.

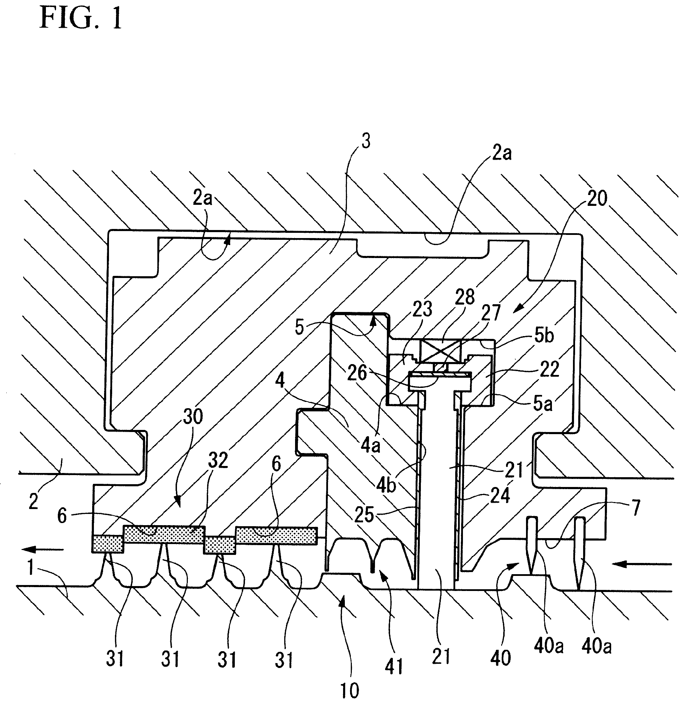

FIG. 1 is an outline configuration drawing of the shaft seal device according to an embodiment in a cross-section that includes the shaft direction. The shaft seal device 10 is arranged between a rotating shaft 1 and a stator (stationary member) 2 in a rotary machine such as a gas turbine or the like, and prevents leakage of a working fluid from the high-pressure side region (the region on the right side in FIG. 1) to the low-pressure side region (the region on the left side in FIG. 1) via an annular gap that is formed between the rotating shaft 1 and the stator 2.

In addition to application to the aforementioned gas turbine, the shaft seal device 10 of the present embodiment can be widely applied to a rotary machine that converts energy to work by the relationship of the rotation of a shaft and the flow of a fluid, such as large-sized fluid machinery like a steam turbine, a compressor, a water wheel, a refrigerator, a pump and the like.

The shaft seal device 10 is constituted from the two seals which are a thin-plate seal 20 and an abradable seal 30. In present embodiment, as shown in FIG. 1, a recess 2a that is formed in an annular shape centered on the axial direction is formed on the inner peripheral surface of the stator 2 facing the outer peripheral surface of the rotating shaft 1, and the thin-plate seal 20 and the abradable seal 30 are arranged so as to be mutually adjacent at different positions in the axial direction on the inner periphery side of a housing 3 that is fixed by being fitted in the recess 2a.

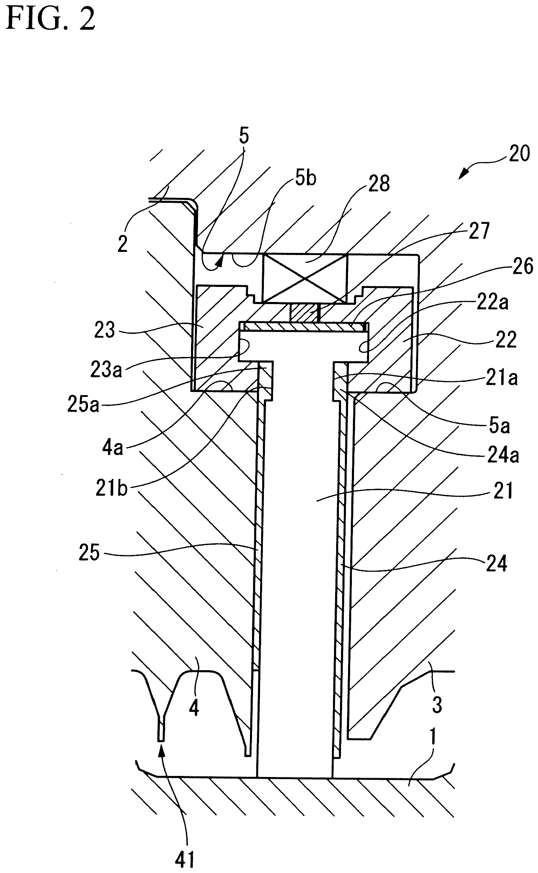

The constitution of the thin-plate seal 20 shall be described with reference to FIG. 1 and FIG. 2.

This thin-plate seal 20 is arranged more on the high-pressure region side than the abradable seal 30, and in greater detail, as shown in FIG. 2, is constituted from a plurality of thin plates 21, U-shaped retention rings 22 and 23, a high-pressure side plate 24, a low-pressure side plate 25, a connection member 26, a spacer 27, and a flat spring 28. The plurality of thin plates 21 consist of metal and are arranged in an overlayed manner mutually spaced apart with fine gaps in the circumferential direction of the rotating shaft 1. The retention rings 22, 23 sandwich the thin plates 21 from both sides at the outer periphery side base end of the thin plates 21. The high-pressure side plate 24 is wedged in by the one side edge of the thin plates 21 that faces the high-pressure side region and the retention ring 22. The low-pressure side plate 25 is wedged in by the other side edge of the thin plates 21 that faces the low-pressure side region and the retention ring 23. The connection member 26 connects both the retention rings 22 and 23 at the outer periphery side of the thin plates 21. The spacer 27 inhibits rattling of each of the thin plates 21 that are sandwiched with the retention rings 22 and 23. The flat spring 28 supports each of the thin plates 21 that are sandwiched by the retention rings 22, 23 in a biased state so as to be coaxial with the rotating shaft 1.

In the thin-plate seal 20 that is constituted in this way, the thin plate 21 is constituted with a thin steel plate having a T shape in which the width at the distal end on the inner periphery side (width in the axial direction of the rotating shaft 1) is narrower than the width of the base end on the outer periphery side (width in the axial direction of the rotating shaft 1). At the position where the width of the thin plates 21 becomes narrow, notch portions 21a, 21b are formed at the side edges of both sides.

The plurality of thin plates 21 are stacked so as to have the same width in the axial direction of the rotating shaft 1. These plurality of thin plates 21 are mutually fixed by for example welding being performed at the base end thereof.

The thin plates 21 have a predetermined rigidity that is determined by the plate thickness in the circumferential direction of the rotating shaft 1. Moreover, the thin plates 21 are attached to the retention rings 22, 23 so that the angle of the thin plates 21 with the outer peripheral surface of the rotating shaft 1 with respect to the rotation direction of the rotating shaft 1 is an acute angle.

Stepped portions 24a and 25a are provided so that the width at the outer periphery side of the high-pressure side plate 24 and the low-pressure side plate 25 in the rotation direction of the rotating shaft 1 may become wider than the other positions. The stepped portions 24a, 25a are fitted in the notch portions 21a, 21b of the thin plates 21.

The retention ring 22 is provided with a slot 22a in the surface that meets the one side edge (high pressure side) at the base end of the plurality of thin plates 21. Similarly, the retention ring 23 is provided with a slot 23a in the surface that meets the other side edge (low pressure side) at the base end of the plurality of thin plates 21. The slot 22a of the retention ring 22 is fitted onto the one side edge (high pressure side) at the base end side of the plurality of thin plates 21. Similarly, the other side edge (low pressure side) at the base end side of the plurality of thin plates 21 is fitted into the slot 23a of the retention ring 23.

In this way, the connection member 26 is inserted between the retention rings 22, 23 in which the outer periphery base end side of the plurality of thin plates 21 is fitted, and this connection member 26 is welded with the retention rings 22, 23, whereby the retention rings 22, 23 are mutually fixed. The spacer 27 is inserted between the base end of the thin plates 21 and the retention rings 22, 23 so as to abut the base end of the thin plates 21 and the retention rings 22, 23. Then, the flat spring 28, which is made to be in contact with the spacer 27 and the retention rings 22, 23, is fixed to the outer periphery side of the spacer 27 and the retention rings 22, 23.

The thin-plate seal 20 that is constituted in this way is together with an annular mounting piece 4 fitted in an annular slot 5 formed in the inner peripheral surface of the housing 3 from the retention rings 22, 23 side. Here, a step is provided in the annular slot 5 on the side surface facing the one side edge of the thin plate 21 (high pressure side) so that the width of the outer periphery side becomes wider than the width of the inner periphery side, in the rotation direction of the rotating shaft 1. Then, a sliding contact surface 5a makes sliding contact with the inner peripheral surface of the retention ring 23 of the thin-plate seal 20. Also, a sliding contact surface 5b that is a surface that faces the inner periphery side in the slot 5 makes sliding contact with the plate spring 28 that is provided at the outer periphery side of the thin-plate seal 20. Note that the width of the inner periphery side of this slot 5 is formed so as to be sufficiently wider than the width of the thin-plate seal 20, in the width in the rotation direction of the rotating shaft 1.

As shown in FIG. 1, a step is provided in the mounting piece 4 on the side surface facing the other side edge of the thin plate 21 (low pressure side) so that the width of the outer periphery side becomes wider than the width of the inner periphery side in the rotation direction of the rotating shaft 1. A surface that faces the outer periphery side in this step is formed as the sliding contact surface 4a. This sliding contact surface 4a makes sliding contact with the surface that faces the inner periphery side of the retention ring 22. The side surface of the mounting piece 4 that faces the other side edge (low pressure side) of the aforementioned thin plates 21 serves as a pressure-receiving surface 4b that abuts the low-pressure side plate 25.

The thin-plate seal 20 is retained at the base end side thereof by the slot 5 of the housing 3 and the mounting piece 4 with the aforedescribed constitution. That is, the respective inner peripheral surfaces of the retention rings 22, 23 make sliding contact with the sliding contact surface 5a of the slot 5 and the sliding contact surface 4a of the mounting piece 4, and the flat spring 28 that is fixed to the outer periphery side of the retention rings 22, 23 makes sliding contact with the sliding contact surface 5a of the slot 5, whereby the thin-plate seal 20 is retained in a state of being fitted in the housing 3.

At this time, relative movement of the thin-plate seal 20 in the axial direction of the rotating shaft 1 with respect to the shot 5 is made possible. Thereby, when the working fluid flows from the high-pressure side region to the low-pressure side region, since the gas pressure acts on the plurality of the thin plates 21 of the thin-plate seal 20, the thin-plate seal 20 moves toward the low-pressure side, and the low-pressure side plate 25 abuts the pressure-receiving surface 4b of the mounting piece 4.

In this thin-plate seal 10, the distal end of each thin plate 21 comes into contact with the rotating shaft 1 with a predetermined pre-load when the rotating shaft 1 is stopped. Then, during rotation of the rotating shaft 1, the distal end of the thin plate 21 floats up from the rotating shaft 1 due to the hydrodynamic effect that occurs by rotation of the rotating shaft 1, and so the thin plate 21 and the rotating shaft 1 enter a contactless state via a slight clearance. Thereby, wear of the thin plates 21 and the rotating shaft 1 is prevented, and leakage of the working fluid from the high-pressure side region to the low-pressure side region is inhibited.

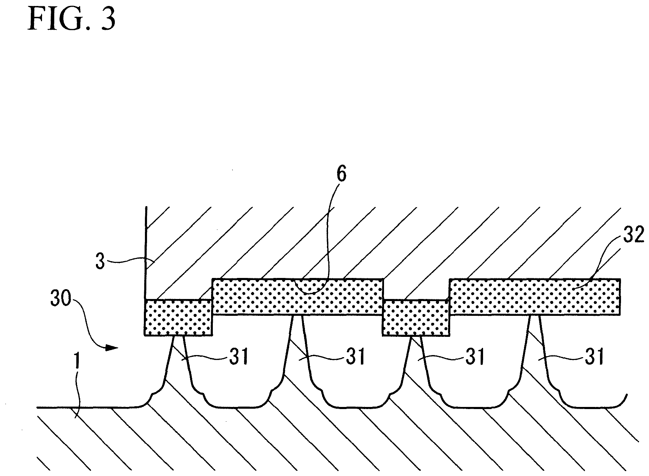

Next, the constitution of the abradable seal 30 shall be described using FIG. 1 and FIG. 3.

The abradable seal 30 is constituted between a low-pressure side inner peripheral surface 6, which is the inner peripheral surface of the housing 3 that is positioned more to the low-pressure side than the aforementioned slot 5, and the rotating shaft 1 which faces the low-pressure side inner peripheral surface 6. Specifically, it is constituted from a plurality of seal fins 31 that project from the rotating shaft 1 to the stator 2 side, that is, to the housing 3 side, and a free-cutting material 32 that is disposed on the stator 2 side, that is, on the low-pressure side inner peripheral surface 6 of the housing 3.

The seal fin 31 is formed in a plurality (four in the present embodiment) spaced apart at a regular interval in the axial direction of the rotating shaft 1, and in the present embodiment, the amount of projection of these seal fins 31 from the outer peripheral surface of the rotating shaft 1 mutually differs between adjacent seal fins 31. Note that the projection amount of these seal fins 31 may also be equivalent.

The free-cutting material 32 is laminated over the entire area of the aforementioned low-pressure side inner peripheral surface 6 of the housing 3 that faces the region where the seal fins 31 of the rotating shaft 1 are formed. Note that in the present embodiment, in accordance with the projection amount of the aforementioned seal fins 31 the lamination amount toward the inner periphery side in the axial direction is made to differ so that the clearance with the seal fins 31 is equivalent. However, in the case of the projection amount of the aforementioned seal fins 31 being equivalent, a uniform amount may be laminated over the entire low-pressure side inner peripheral surface 6.

This free-cutting material 32 consists of material that has little sliding friction heat and excellent cuttability, and for example an abradable material that consists of a publicly known free-cutting material is used, such as a cobalt-nickel-chromium-aluminum-yttrium series material (CoNiCrAlY series material), nickel-chromium-aluminum series material (NiCrAl series material), and nickel-chromium-iron-aluminum-boron-nitrogen series material (NiCrFeAlBN series material).

As the free-cutting material 32, besides the aforementioned abradable material, it is possible to use a honeycomb layer that consists of metal or ceramic.

In the shaft seal device 10 of the present embodiment, fins 40a that project to the rotating shaft 1 side are embedded in a high-pressure side inner peripheral surface 7 that is the inner peripheral surface of the housing 3 positioned more to the high pressure side than the slot 5 in the housing 3, and thereby a first labyrinth seal 40 is constituted on the high-pressure side of the thin-plate seal 20.

Moreover, a portion of the inner peripheral surface of the aforementioned mounting piece 4 has a shape that projects toward the rotating shaft 1 side, and thereby a second labyrinth seal 41 is constituted between the thin-plate seal 20 and the abradable seal 30.

The first labyrinth seal 40 and the second labyrinth seal 41 are provided with the aim of reducing the amount of leakage of the working fluid. These do not necessarily need to be provided, and the shaft seal device 10 may consist of only a thin-plate seal 20 and the abradable seal 30.

According to this abradable seal 30, even if the fin 31 and the free-cutting material 32 come into contact and slide for whatever reason during operation, the free-cutting material 32 is easily cut by the seal fin 31, and the occurrence of sliding heat generation and bending deformation of the rotating shaft 1 due to the heat generation is suppressed. Also, since contact between the seal fin 31 and the free-cutting material 32 in this manner is allowed, the gap of the clearance between the two, that is, the seal clearance, can be set to a small amount. For that reason, it is possible to effectively restrict the flow amount of the working fluid that leaks from the high-pressure side region to the low-pressure side region.

Next, the action of the shaft seal device 10 of the present embodiment that is provided with the aforedescribed thin-plate seal 20 and the abradable seal 30 shall be described while contrasting with a shaft seal device 50 of a comparative example described hereinbelow.

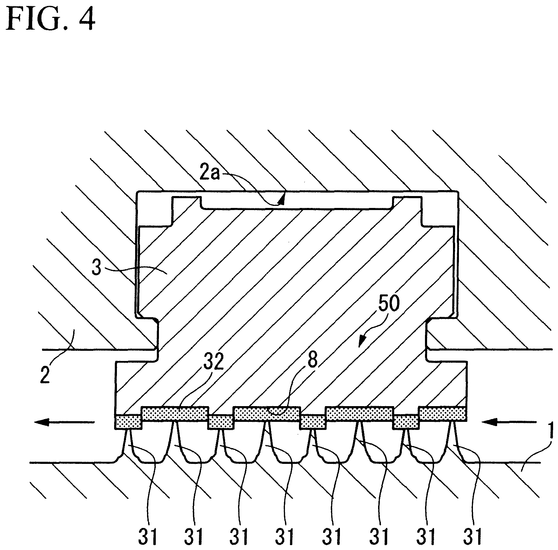

FIG. 4 shows a cross-sectional view that includes the axial line of the shaft seal device 50 according to the comparative example. This shaft seal device 50 consists of only the abradable seal 30 mentioned above. A plurality of seal fins 31 (eight in this comparative example) are formed on the rotating shaft 1 side, and a free-cutting material 32 is laminated on the inner peripheral surface 8 of the housing 3 facing these seal fins 31.

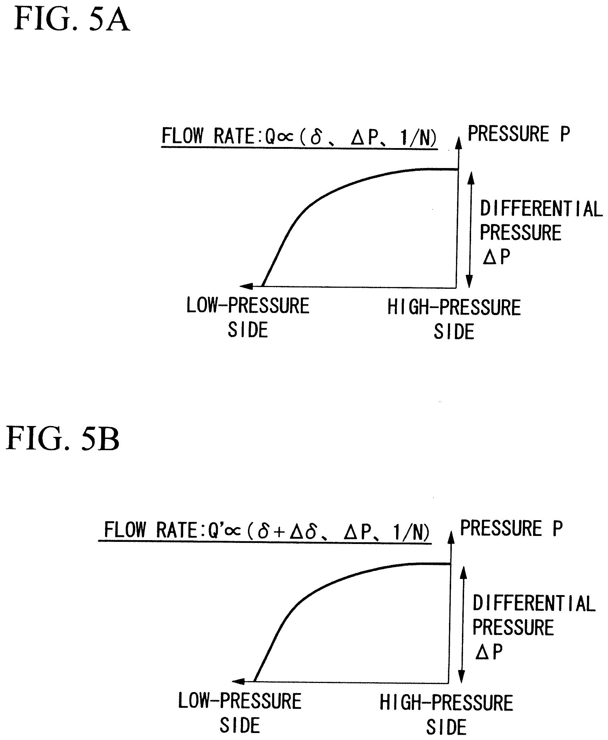

The relationship between the leakage flow rate Q of the working fluid, and the differential pressure ΔP between the high-pressure side and the low-pressure side in the shaft seal device 50 of the comparative example shall be explained using FIG. 5A and FIG. 5B.

FIG. 5A is a graph that shows the differential pressure curve from the high-pressure side to the low-pressure side at the initial stage of rotation. FIG. 5B is a graph that shows the differential pressure curve from the high-pressure side to the low-pressure side after sliding.

Here, FIG. 5A shows a proportional relation between the three parameters of the flow rate Q of leakage from the high-pressure side to the low-pressure side, namely, the average seal clearance δ, the differential pressure ΔP, and the inversion of the number (step number) of the seal fins 31 1/N. Also, after the sliding shown in FIG. 5B, the seal fins 31 make sliding contact and cut the free-cutting material 32, whereby the average seal clearance δ increases compared with the initial period of rotation in FIG. 5A. Then, assuming this amount of increase to be Δδ, as shown in FIG. 5B, the average seal clearance after the sliding becomes δ + Δδ. Accordingly, the flow rate Q' after the sliding becomes greater than the flow rate Q at the start of rotation by the amount of Δδ.

In other words, in the shaft seal device 50 of the comparative example, as the cut amount of the free-cutting material 32 by the seal fins 31 increases, the leakage flow rate increases.

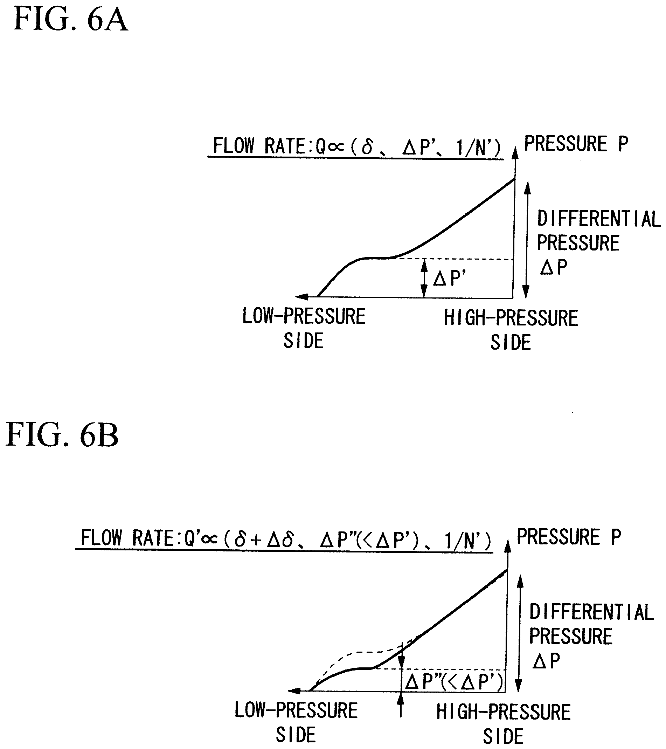

Next, the relationship between the flow rate Q of leakage of the working fluid and the differential pressure ΔP between the high-pressure side and the low-pressure side in the shaft seal device 10 of the present embodiment shall be described using FIG. 6A and FIG. 6B.

FIG. 6A is a graph that shows the differential pressure curve from the high-pressure side to the low-pressure side at the initial stage of rotation. FIG. 6B is a graph that shows the differential pressure curve from the high-pressure side to the low-pressure side after sliding.

FIG. 6A shows a proportional relation between the three parameters of the flow rate Q of leakage from the high-pressure side to the low-pressure side through the abradable seal 30, namely, the average seal clearance δ, the differential pressure ΔP, and the inversion of the number (step number) of the seal fins 31 1/N.

Note that in the differential pressure ΔP' acting on the abradable seal 30 in the shaft seal device 10 of the present embodiment, sharing of the differential pressure is performed with the thin-plate seal 20, whereby it becomes smaller than the differential pressure ΔP acting on the entire shaft seal device 10.

When the seal fin 31 slides against and cuts the free-cutting material 32, the average seal clearance δ increases compared with the initial period of rotation shown in FIG. 6A. Then, assuming this amount of increase to be Δδ, as shown in FIG. 6B, the average seal clearance after the sliding becomes δ + Δδ.

Also, when the average seal clearance δ increases in the abradable seal 30, in the shaft seal device 10 of this embodiment, the sharing amount of the differential pressure ΔP changes. In other words, the sharing amount of the differential pressure in the thin-plate seal 20 increases, and the sharing amount of the differential pressure in the abradable seal 30 decreases. Thereby, the differential pressure ΔP" that is smaller than the differential pressure ΔP' at the initial stage of rotation acts on the abradable seal 30.

Accordingly, in the shaft seal device 10 of the present embodiment, although the average seal clearance of the abradable seal 30 increases after sliding, the differential pressure that acts on the abradable seal 30 decreases. For that reason, as a result it is possible to suppress fluctuations in the flow rate Q' after sliding from the flow rate Q at the initial stage of rotation to a low level. In other words, in the shaft seal device 10 of the present embodiment, even in the case of the free-cutting material 32 being cut by the seal fin 31, it is possible to effectively achieve leakage prevention of the working fluid.

According to the shaft seal device 10 of the present embodiment as given above, even in the case of wear of the free-cutting material 32 progressing in the abradable seal 30 and the seal clearance increasing as a result, since sharing of the differential pressure with the thin-plate seal 20 is performed, it is possible to reduce the differential pressure that occurs solely in the abradable seal 30. For that reason, it is possible to inhibit changes in the flow rate from the high-pressure side region to the low-pressure side region in the abradable seal 30.

In particular, in the case of the seal clearance of the abradable seal 30 increasing, the ratio of sharing the differential pressure by the thin-plate seal 20 becomes greater than the sharing ratio of the abradable seal 30. For that reason, it is possible to effectively suppress changes in the flow rate in the abradable seal 30, and thereby it is possible to achieve leakage prevention of the working fluid in the entire shaft seal device 10.

Normally, it is not possible to use the thin-plate seal 20 by itself in the case of the differential pressure between the high-pressure side region and the low-pressure side region being large. In the present embodiment, since the differential pressure is shared by the thin-plate seal 20 and the abradable seal 30, it is possible to reduce the differential pressure that occurs in the thin-plate seal 20. Accordingly, even in the case of the differential pressure between the high-pressure side region and the low-pressure side region being so large that sealing cannot be performed solely with the thin-plate seal 20, it is possible to apply the thin-plate seal 20. Moreover, since the abrasion resistance of this thin-plate seal 20 is high, it is possible to achieve leakage prevention in a stable manner over a long period.

Since the shaft seal device 10 of the present embodiment as given above is provided with the thin-plate seal 20 having excellent wear resistance and high durability, and the abradable seal 30 having high differential pressure resistance, even in the case of the differential pressure between the high-pressure side region and the low-pressure side region being large, it is possible to achieve prevention of working fluid leakage in a stable manner over a long period.

Here, in the case of assuming the abradable seal 30 to be arranged more to the high-pressure side than the thin-plate seal 20, due to wear of the free-cutting material 32 caused by contact with the seal fin 31, powder produced by cutting of the free-cutting material 32 flows into the thin-plate seal 20. Since the rigidity of the thin-plates 21 in the thin-plate seal 20 is increased due to this cutting powder, wear is triggered, and changes in the flow rate occur in the thin-plate seal 20.

With regard to this point, since the thin-plate seal 20 is arranged more to the high-pressure side than the abradable seal 30 in the present embodiment, it is possible to achieve prevention of working fluid leakage in a stable manner in the thin-plate seal 20 without an increase in the rigidity of the thin-plates 21 of the thin-plate seal 20 as described above.

Hereinabove the embodiment of the present invention was described in detail, but it is not limited thereto and some design modifications are possible provided they do not depart from the technical idea of the present invention.

For example, the shaft seal device 10 of the present embodiment was constituted by arranging one each of the thin-plate seal 20 and the abradable seal 30, but at least one of them may be arranged in a plurality.

The embodiment was constituted by the thin-plate seal 20 being arranged on the high-pressure side of the abradable seal 30, but it may also be constituted in the reverse of this, that is, with the abradable seal 30 arranged on the high-pressure side of the thin-plate seal 20. In this case, although there is the disadvantage of powder produced by cutting of the free-cutting material 32 flowing into the thin-plate seal 20, it is possible to constitute a shaft seal device that utilizes the advantage of the thin-plate seal 20 and the abradable seal 30 similarly to the embodiment.

The abradable seal 30 of the shaft seal device 10 of the present embodiment is constituted with the seal fin 31 formed on the rotating shaft 1, and the free-cutting material 32 disposed on the stator 2 side, that is, the housing 3, but it may also have a constitution in which the free-cutting material 32 is disposed on the rotating shaft 1, and the seal fin 31 is formed on the stator 2 side.

### [INDUSTRIAL APPLICABILITY]

The shaft seal device of the present invention is provided with a thin-plate seal having excellent wear resistance and high durability and an abradable seal having high differential pressure resistance, and even in the case of the differential pressure between the high-pressure side region and the low-pressure side region being large, it is possible to achieve prevention of working fluid leakage in a stable manner over a long period.

### [DESCRIPTION OF REFERENCE NUMERALS]

- 1: rotating shaft
- 2: stator (stationary member)
- 3: housing
- 10: shaft seal device
- 20: thin-plate seal
- 21: thin plate
- 24: high-pressure side plate
- 25: low-pressure side plate
- 30: abradable seal
- 31: seal fin
- 32: free-cutting material

## Claims

1. A shaft seal device that seals between the outer peripheral surface of a rotating shaft (1) and a stationary member (2) that is provided on the outer peripheral side of the rotating shaft, comprising:
a thin-plate seal (20) that has a plurality of thin plates (21) that are arranged in the circumferential direction of the rotating shaft (1);
a housing (3) arranged between the outer peripheral surface of the rotating shaft (1) and the stationary member (2);
a labyrinth seal (41) having a projection that projects toward the rotating shaft (1) from the housing (3); and
wherein an abradable seal (30) that is arranged at a position differing with the thin-plate seal (20) in the axial direction, and having a free-cutting material (32) that is disposed on a peripheral surface at either one of the rotating shaft (1) and the stationary member (2), and a plurality of seal fins (31) that project toward the rotating shaft (1) or stationary member (2) from the other of the rotating shaft (1) and the stationary member (2),
**characterised in that**, in the axial direction, the thin-plate seal (20) is arranged on a high-pressure side with respect to the abradable seal (30),
the thin-plate seal and one of the plurality of seal fins and the free-cutting material of the abradable seal are arranged on the inner periphery of the housing,
the labyrinth seal (41) is arranged between the thin-plate seal (20) and the abradable seal (30) in the axial direction, and
in the abradable seal (30), the peripheral surface on which the free-cutting material (32) is disposed has a level difference so that clearance with the seal fins (31) is equivalent.

2. The shaft seal device according to claim 1, wherein
the housing (3) is fixed in a recess (2a) of the stationary member (2),
an outer end of the thin-plate seal (20) is fitted in an annular slot (5) formed in an inner peripheral surface of the housing (3), and
the labyrinth seal (41) is fitted in the annular slot (5) of the housing (3).

3. The shaft seal device according to claim 2, further comprising:
a mounting piece (4) arranged between the thin plate seal (20) and the abradable seal (30), wherein
the housing has the annular slot (5) in which the mounting piece (4) and the thin-plate seal (20) are arranged.

4. The shaft seal device according to any of claims 1-3, further comprising:
another labyrinth seal (40) arranged on a high-pressure side with respect to the thin-plate seal (20),
wherein the another labyrinth seal (40) has a fin (40a) that projects toward the rotating shaft (1) from the housing (3).

## Patentansprüche

1. Wellendichtungsvorrichtung, die zwischen der Außenumfangsfläche einer rotierenden Welle (1) und einem stationären Element (2), das auf der Außenumfangsseite der rotierenden Welle bereitgestellt ist, abdichtet und Folgendes umfasst:
eine Dünnplattendichtung (20), die eine Vielzahl von dünnen Platten (21) aufweist, die in der Umfangsrichtung der rotierenden Welle (1) angeordnet sind;
ein Gehäuse (3), das zwischen der Außenumfangsfläche der rotierenden Welle (1) und dem stationären Element (2) angeordnet ist;
eine Labyrinthdichtung (41) mit einem Vorsprung, der vom Gehäuse (3) zur rotierenden Welle (1) vorsteht; und
wobei eine abreibbare Dichtung (30), die in einer Position, die sich von der Dünnplattendichtung (20) in der Axialrichtung unterscheidet, angeordnet ist und ein zerspanbares Material (32) aufweist, das auf einer Umfangsfläche entweder an der rotierenden Welle (1) oder am stationären Element (2) platziert ist, und eine Vielzahl von Dichtrippen (31), die von der rotierenden Welle (1) oder vom stationären Element (2) zum anderen der rotierenden Welle (1) und des stationären Elements (2) vorstehen,
**dadurch gekennzeichnet, dass**
die Dünnplattendichtung (20) in der Axialrichtung mit Bezug auf die abreibbare Dichtung (30) auf einer Hochdruckseite angeordnet ist,
die Dünnplattendichtung und eine der Vielzahl von Dichtrippen sowie das zerspanbare Material der abreibbaren Dichtung auf dem Innenumfang des Gehäuses angeordnet sind,
die Labyrinthdichtung (41) in der Axialrichtung zwischen der Dünnplattendichtung (20) und der abreibbaren Dichtung (30) angeordnet ist, und
die Umfangsfläche in der abreibbaren Dichtung (30), auf der das zerspanbare Material (32) platziert ist, einen Niveauunterschied aufweist, derart, dass ein Spiel zu den Dichtrippen (31) gleich ist.

2. Wellendichtungsvorrichtung nach Anspruch 1, wobei
das Gehäuse (3) in einer Ausnehmung (2a) des stationären Elements (2) befestigt ist,
ein äußeres Ende der Dünnplattendichtung (20) in einem ringförmigen Schlitz (5), der in einer Innenumfangsfläche des Gehäuses (3) gebildet ist, eingesetzt ist, und
die Labyrinthdichtung (41) in den ringförmigen Schlitz (5) des Gehäuses (3) eingesetzt ist.

3. Wellendichtungsvorrichtung nach Anspruch 2, die ferner Folgendes umfasst:
ein Montagestück (4), das zwischen der Dünnplattendichtung (20) und der abreibbaren Dichtung (30) angeordnet ist, wobei
das Gehäuse den ringförmigen Schlitz (5) aufweist, in dem das Montagestück (4) und die Dünnplattendichtung (20) angeordnet sind.

4. Wellendichtungsvorrichtung nach einem der Ansprüche 1 bis 3, die ferner Folgendes umfasst:
eine weitere Labyrinthdichtung (40), die mit Bezug auf die Dünnplattendichtung (20) auf einer Hochdruckseite angeordnet ist,
wobei die weitere Labyrinthdichtung (40) eine Rippe (40a) aufweist, die vom Gehäuse (3) zur rotierenden Welle (1) vorsteht.

## Revendications

1. Dispositif de joint d'arbre qui assure l'étanchéité entre la surface périphérique externe d'un arbre rotatif (1) et un élément fixe (2) qui est disposé sur le côté périphérique externe de l'arbre rotatif, comprenant :
un joint à plaques minces (20) qui possède une pluralité de plaques minces (21) qui sont agencées dans la direction circonférentielle de l'arbre rotatif (1) ;
un carter (3) agencé entre la surface périphérique externe de l'arbre rotatif (1) et l'élément fixe (2) ;
un joint à labyrinthe (41) ayant une saillie qui fait saillie en direction de l'arbre rotatif (1) à partir du carter (3) ; et
dans lequel un joint abradable (30) est agencé à une position différente du joint à plaques minces (20) dans la direction axiale, et ayant un matériau de décolletage (32) qui est disposé sur une surface périphérique au niveau de l'un ou l'autre parmi l'arbre rotatif (1) et l'élément fixe (2), et une pluralité d'ailettes de joint (31) qui font saillie en direction de l'arbre rotatif (1) ou de l'élément fixe (2) à partir de l'autre parmi l'arbre rotatif (1) et l'élément fixe (2),
**caractérisé en ce que**, dans la direction axiale, le joint à plaques minces (20) est agencé sur un côté haute pression par rapport au joint abradable (30),
le joint à plaques minces et un parmi la pluralité d'ailettes de joint et le matériau de décolletage du joint abradable sont agencés sur la périphérie interne du carter,
le joint à labyrinthe (41) est agencé entre le joint à plaques minces (20) et le joint abradable (30) dans la direction axiale, et
dans le joint abradable (30), la surface périphérique sur laquelle le matériau de décolletage (32) est disposé présente une différence de niveau de sorte qu'un jeu avec les ailettes de joint (31) est équivalent.

2. Dispositif de joint d'arbre selon la revendication 1, dans lequel
le carter (3) est fixé dans un évidement (2a) de l'élément fixe (2),
une extrémité externe du joint à plaques minces (20) est ajustée dans une fente annulaire (5) formée dans une surface périphérique interne du carter (3), et
le joint à labyrinthe (41) est ajusté dans la fente annulaire (5) du carter (3).

3. Dispositif de joint d'arbre selon la revendication 2, comprenant en outre :
une pièce de montage (4) agencée entre le joint à plaques minces (20) et le joint abradable (30), dans lequel
le carter possède la fente annulaire (5) dans laquelle la pièce de montage (4) et le joint à plaques minces (20) sont agencés.

4. Dispositif de joint d'arbre selon l'une quelconque des revendications 1 à 3, comprenant en outre :
un autre joint à labyrinthe (40) agencé sur un côté haute pression par rapport au joint à plaques minces (20),
dans lequel ledit autre joint à labyrinthe (40) possède une ailette (40a) qui fait saillie en direction de l'arbre rotatif (1) à partir du carter (3).
